# EUROPÄISCHE PATENTANMELDUNG

(11) **EP 1 637 351 A1**
(43) Veröffentlichungstag der Anmeldung: **22.03.2006**
(21) Anmeldenummer: 05020220.9
(22) Anmeldetag: 16.09.2005
(51) Int. Cl.: B60B 33/00

(54) **Rollenhalterung**

(30) Priorität: 16.09.2004 DE 202004014452 U
(71) Anmelder: GEBHARDT Transport- und Lagersysteme GmbH, 93413 Cham (DE)
(72) Erfinder: Hauser, Erwin, 93413 Cham (DE); Kärtner, Georg, 93482 Pempfling (DE)
(74) Vertreter: Eder, Thomas

(57) **Zusammenfassung**

Die Erfindung betrifft eine Rollenhalterung zur Montage von Rollen oder Rädern, die insbesondere zu Austauschzwecken an bzw. unter einem Behälter angebracht oder von diesem gelöst werden kann, ohne dass dafür der Zugang zum Behälterinneren erforderlich ist.

## Beschreibung

Die vorliegende Erfindung betrifft eine Rollenhalterung zur Montage von Rollen oder Rädern nach dem Oberbegriff des Anspruchs 1.

Der Einsatz von Rollen oder Rädern in vielen Bereichen des technischen Alltags ist bekannt. Oft werden Rollen unter Behältern angeordnet, um diese leichter beweglich zu machen. Nach dem Stand der Technik werden solche Rollen, die oft in einer einfachen, aber robusten Form ausgeführt bzw. gehalten sind, mit dem Behälter durch dessen Unterseite verschraubt. Je nach Art des Behälters kann dabei ein Austausch von beispielsweise beschädigten Rollen problematisch werden, wenn die Innenseite des Behälters bzw. dessen Bodenoberseite nur schwer oder gar nicht zugänglich ist, um die Verschraubung der Rollenhalterung zu lösen. Insbesondere bei Isolierbehältern, die auch im Bodenbereich eine isolierende Schicht in einer gewissen Wandstärke aufweisen, kann es erforderlich sein, die Isolierung in diesem Bodenbereich zu öffnen bzw. zu beseitigen, um an die zur Innenseite des Behälters reichende Verschraubung heranzukommen. Dies verursacht Arbeitskosten und darüber hinaus unnötige Stillstandszeiten.

Aufgabe der Erfindung ist es daher, eine Rollenhalterung zu schaffen, welche das einfache Austauschen von Rollen oder solche Rollen halternden Lagerböcken unter Behältern vereinfacht und beschleunigen kann.

Die Aufgabe wird gelöst durch eine Rollenhalterung nach Anspruch 1.

Der Erfindung liegt die Idee zu Grunde, eine Rollenhalterung lösbar mit einem Behälter, insbesondere dessen Rahmen zu verbinden, ohne dass dafür die Innenseite des Behälters bzw. die der Rolle gegenüberliegende Seite des Rahmens für die Montage oder Demontage zugänglich sein muss. Damit kann die Rolle von der Unterseite des Behälters schnell und einfach ausgetauscht werden, wodurch vorteilhaft Kosten und Stillstandszeiten eingespart werden.

Erfindungsgemäß ist die Rollenhalterung zur Montage von Rollen oder Rädern an der Unterseite einer Montageplatte vorgesehen. Die Montageplatte kann dabei Teil eines Rahmens sein oder auch ein eigenständiges Element, welches an der Unterseite des von der Rolle zu tragenden Behälters angeordnet ist. Die Rollenhalterung umfasst wenigstens einen eine Rolle aufnehmenden Lagerbock, der lösbar mit der Montageplatte zu verbinden ist. Im montierten Zustand kommt dabei erfindungsgemäß der Lagerbock an der Unterseite der Montageplatte zu liegen bzw. soll dort befestigt werden. Zu diesem Zweck sind in dem Lagerbock und der Montageplatte wenigstens zwei jeweils paarweise zusammenwirkende Ausnehmungen vorgesehen. In der montierten Position des Lagerbocks an der Montageplatte liegt dabei eine Ausnehmung der Montageplatte wenigstens zum Teil in der Flucht einer entsprechenden Ausnehmung im Lagerbock, so dass durch beide Öffnungen gemeinsam ein Befestigungselement hindurchgesteckt werden kann. Erfindungsgemäß soll dieses Befestigungselement von der der Rolle zugewandten Unterseite der Montageplatte durch die darin ausgebildete Öffnung nach oben hindurchgesteckt werden können. Ein Zugang von der Oberseite der Montageplatte ist dafür nicht nötig.

Zur einfachen Befestigung der Rollenhalterung ist die wenigstens eine Ausnehmung in der Montageplatte als Langloch entlang einer gedachten Langlochachse ausgeführt. Das Langloch weist dabei einen verengten und einen erweiterten Abschnitt auf, wobei das Befestigungselement insbesondere in dem Bereich des erweiterten Abschnitts durch die Ausnehmung hindurchsteckbar sein soll. Im durchgesteckten Zustand soll das Befestigungselement erfindungsgemäß aus dem erweiterten in den verengten Bereich des Langlochs verschieblich sein, wobei die Verengung gleichzeitig einen das Befestigungselement hintergreifenden Anschlag bilden soll, der mit einem Anschlagselement des Befestigungselements zusammenwirkt.

Auf diese Weise ist es in erfinderischer Weise möglich geworden, ein Befestigungselement von der Unterseite eines Behälters durch den erweiterten Bereich wenigstens eines Langlochs in der Montageplatte hindurchzuführen, um es anschließend in den verengten Bereich des Langlochs seitlich zu verschieben. Ein an dem Befestigungselement ausgebildeter Anschlag hintergreift dann in dem verengten Abschnitt Bereiche der Montageplatte, so dass eine Bewegung gegen diesen Anschlag bzw. entgegen der Durchsteckrichtung nicht mehr möglich ist, wodurch das Befestigungselement von der Montageplatte gehalten wird. In dieser Lage des Befestigungselements lässt sich dann der Lagerbock mit der darin befindlichen Rolle an dem Befestigungselement anordnen und mit diesem verspannen, so dass schließlich die Rolle an der Montageplatte bzw. an dem Behälter befestigt ist.

In einer vorteilhaften Ausführungsform der Erfindung sind die im Lagerbock vorgesehenen Ausnehmungen so angeordnet, dass das jeweilige Befestigungselement die Ausnehmungen des Lagerbocks nur dann durchdringen kann, wenn sie in der Montageplatte die verengte Position eingenommen haben. Dadurch ergibt sich der vorteilhafte Effekt, dass das in dem verengten Bereich des Langlochs befindliche Befestigungselement in dieser Position seitlich unverschieblich gehalten wird, wenn der Lagerbock von unten auf das Befestigungselement aufgesetzt wird. Damit ist eine Bewegung des Befestigungselements in den erweiterten Bereich des Langlochs und das Herausfallen oder die Entnahme aus der Montageplatte sicher verhindert.

Bei nur einem Befestigungselement bzw. jeweils einer Ausnehmung in Lagerbock und Montageplatte ist für diesen Effekt ein seitlicher Anschlag für den Lagerbock erforderlich, der ihn in dieser Position hält und eine Verschiebung insbesondere in Richtung der Langlochlängsachse relativ zur Montageplatte verhindert.

Bei zwei oder mehr jeweils paarweise zusammenwirkenden Ausnehmungen kann die vorteilhafte Fixierung der Befestigungselemente allein durch die geschickte Wahl der Ausnehmungen in dem Lagerbock erreicht werden. Wenigstens eine, vorteilhafterweise aber mehrere Ausnehmungen des Lagerbocks sind dabei so vorzusehen, dass sie jeweils mit dem verengten Bereich des zugehörigen Langlochs der Montageplatte fluchten, nicht jedoch mit dem erweiterten Bereich. Wenn die Langlöcher - wie später noch zu sehen sein wird - geschickt gegeneinander angeordnet sind, so genügt diese Anordnung zur horizontalen Fixierung der Befestigungselemente bzw. des auf diese aufgesteckten Lagerbocks. Verlaufen die Langlöcher alle entlang einer Längsrichtung und sind auch die erweiterten bzw. verengten Bereiche alle im gleichen Sinne dieser Richtung angeordnet, so wäre grundsätzlich eine Verschiebung des gesamten Lagerbocks mit allen Befestigungselementen in Richtung auf den jeweils erweiterten Bereich der Langlöcher denkbar. Ein an der Unterseite der Montageplatte vorgesehener Anschlag kann eine solche seitliche Verschiebung des Lagerbocks jedoch verhindern und damit die einfache und schnelle horizontale Fixierung des Lagerbocks gegenüber der Montageplatte ermöglichen.

Besonders vorteilhaft hat sich die Verwendung von Schrauben, insbesondere Schlossschrauben als Befestigungselemente herausgestellt. Der Kopf der Schraube dient dabei als gegen den Anschlag G der Montageplatte wirkendes Anschlagelement, wodurch eine zur Rolle hin gerichtete axiale Bewegung des Befestigungselements unterbunden wird. Die Schlossschraube kann dabei mit ihrem Kopf durch den erweiterten Bereich jedes Langlochs hindurchgesteckt und dann in den verengten Bereich seitlich verschoben werden, so dass der Kopf der Schraube die Montageplatte im Langloch hintergreift. In dieser Lage der Schrauben kann dann der Lagerbock auf die Schrauben aufgesteckt und mit Muttern von der Unterseite des Lagerbocks gegen die Montageplatte verschraubt werden. Schlossschrauben eignen sich insbesondere aufgrund ihres relativ flachen Kopfes, der auf der Oberseite der Montageplatte nur wenig Bauraum einfordert.

Vorteilhafterweise sind die verengten Bereiche der Ausnehmungen bzw. Langlöcher in der Montageplatte als Verdrehsicherung ausgebildet, welche mit den sie durchragenden Befestigungselementen so zusammenwirkt, dass eine Drehung der Befestigungselemente um ihre Längsachse vermieden wird. Dies kann insbesondere ein flächiger Abschnitt an der Innenseite des verengten Bereichs des Langlochs sein, der mit einem komplementär ausgebildeten Abschnitt des Befestigungselements zusammenwirkt.

Denkbar ist insbesondere die Ausbildung eines Vierkants unterhalb des Kopfes einer Schraube, wobei der Vierkant bei geeigneter Ausrichtung in den verengten Bereich des Langlochs einführbar ist, einer Drehung der Schraube um ihre Längsachse jedoch aufgrund der Zusammenwirkung des Vierkants mit den inneren Begrenzungsflächen des verengten Bereichs des Langlochs entgegenwirkt. Der Vorteil einer solchen Verdrehsicherung liegt in der vereinfachten Befestigung des Lagerbocks insbesondere bei Schraubverbindungen. Die Schraube als Befestigungselement muss beim Anziehen der auf der Unterseite des Lagerbocks konternden Muttern nicht mehr gegen eine Verdrehung gegengehalten werden, da dies durch die Verdrehsicherung übernommen wird.

Eine vorteilhafte Ausführungsform der Erfindung sieht vor, dass die Montageplatte als Teil einer Grundplatte, eines Rahmens oder einer Bodenplatte eines Behälters ausgeführt ist. Eine einstückig als Teil eines übergeordneten Rahmens oder einer Grundplatte ausgebildete Montageplatte verringert den Materialaufwand und das Gewicht. In diesem Fall können die entsprechenden Ausnehmungen unmittelbar in die Bodenplatte bzw. den Rahmen eingebracht werden, ohne dass zusätzliche Elemente von Seiten des Behälters vorzusehen wären. Alternativ ist es jedoch auch möglich, die Montageplatte als zusätzlich an der Unterseite eines Behälters oder Rahmens anzubringendes Element auszubilden. Dies erhöht die Flexibilität in der Verwendung bzw. Anordnung der Rollenhalterung und verzichtet insbesondere auf eine Festlegung der genauen Anordnung der Ausnehmungen bereits bei der Herstellung des Rahmens bzw. des Behälterbodens. In diesem Fall kann die Montageplatte an geeigneter Stelle von unten gegen den Rahmen bzw. die Grundplatte verschweißt oder in sonstiger geeigneter Form angebracht werden. Erforderlich ist es dabei, dass zwischen Oberseite der Montageplatte und Unterseite des darüber liegenden Rahmens bzw. der Grundplatte ein Abstand eingehalten wird, der zumindest Raum für die Anschlagselemente der Befestigungselemente (insbesondere der Schraubenköpfe) bietet.

Eine besonders vorteilhafte Ausführungsform der Erfindung sieht vor, dass die Montageplatte im Bereich ihrer Ausnehmungen so weit gegenüber einer gedachten Ebene der Montageplatte vertieft ausgebildet ist, dass das Anschlagselement der Befestigungselemente zwischen dem Anschlag des verengten Bereichs der Ausnehmung und der Ebene aufgenommen wird. Ziel dieser Ausführung ist es also, den von den Anschlagselementen (insbesondere Schraubenköpfen) beanspruchten Bauraum innerhalb der Montageplatte auszubilden, so dass dieser nicht in Richtung des Behälterinneren bzw. nach oben ragt und dort konstruktiv hinderlich wirkt.

Wird der verengte Bereich der Langlöcher um das entsprechende Maß abgesenkt, so treten die Anschlagselemente der Befestigungselemente nicht mehr durch eine die Oberseite der Montageplatte abdeckende gedachte Ebene hindurch. Insbesondere bei einstückig mit einem Grundrahmen oder einer Grundplatte ausgebildeten Montageplatten ergibt sich eine im Wesentlichen plane Oberfläche des Rahmens bzw. der Grundplatte, auf der der Behälter, auch ein Isolierbehälter mit entsprechender Isolierung, aufgebracht werden kann, während die Montage oder Demontage von Rollen allein über die Unterseite des Behälters mühelos möglich ist.

Wie bereits erwähnt, sind in einer besonders vorteilhaften Ausführungsform der Erfindung wenigstens zwei Ausnehmungen der Montageplatte in Richtung ihrer Langloch-Längsachsen oder parallel verschoben dazu so einander gegenüberliegend angeordnet, dass ihre jeweiligen verengten bzw. erweiterten Positionen beide an den einander zugewandten oder abgewandten Enden der Langlöcher, also entgegengesetzt oder antiparallel angeordnet sind. Auf diese Weise werden die jeweils in dem verengten Bereich der Ausnehmungen angeordneten Befestigungselemente alleine dadurch in ihrer horizontalen Position der Langlöcher gehalten ("automatisch fixiert"), dass der Lagerbock mit seinen Ausnehmungen, die stets gegenüberliegend zu den verengten Bereichen in der Montageplatte ausgebildet sind, auf die Befestigungselemente aufgesetzt wird. Eine Bewegung des so aufgesetzten Lagerbocks mitsamt den Befestigungselementen in Richtung auf einen erweiterten Bereich eines oder auch mehrerer erster Langlöcher wird dann dadurch blockiert, dass weitere Befestigungselemente den Lagerbock und die Montageplatte in den verengten Bereichen einer zweiten Gruppe von Montageplatten-Langlöchern durchragen, deren erweiterter Bereich in entgegengesetzter Richtung zu denen der ersten Gruppe von Langlöchern verläuft. Daher kann eine Bewegung des gesamten Lagerbocks weder in die eine noch in die andere Richtung erfolgen. Dies gewährleistet eine relativ sichere Positionierung des Lagerbocks relativ zu der Montageplatte, da selbst bei lockeren Befestigungsmitteln (lockere oder abgefallene Muttern) die Positionierung des Lagerbocks in horizontaler Richtung relativ zu der Montageplatte erhalten bleibt. Durch das auf den Lagerböcken ruhende Eigengewicht des Behälters wird auch einen Bewegung des Lagerbocks weg von der Montageplatte erschwert. Erst durch die gewollte Entfernung des Lagerbocks in vertikaler Richtung nach unten können die dann frei gewordenen Befestigungsmittel (insbesondere Schrauben) in ihren Langlöchern jeweils auf den erweiterten Bereich zu bewegt und dort nach unten aus der Montageplatte herausgenommen werden.

Es ist erfindungsgemäß nicht erforderlich, dass die erweiterten bzw. verengten Bereiche der Langlöcher für die "automatische Fixierung" in genau entgegengesetzter Richtung angeordnet sind. Es genügt, wenn die Längsachse eines ersten Langlochs mit der Längsachse eines zweiten Langlochs einen Winkel ≠ 90° bildet, da bei 90° theoretisch eine Schwenkbewegung um das erste Befestigungselement erfolgen könnte, bei der sich das zweite Befestigungselement in tangentialer Richtung zu dieser Drehbewegung aus dem verengten in den erweiterten Bereich bewegt. Sind jedoch mehr als zwei Befestigungselemente vorgesehen, so gilt der vorbeschriebene Sicherungseffekt für all die Fälle, bei denen die Längsachsen nicht alle in die gleiche Richtung zeigen bzw. die Langlöcher hinsichtlich verengtem und erweitertem Bereich nicht alle die gleiche Orientierung aufweisen.

Eine besonders einfache und stabile Ausführungsform der Erfindung sieht vier im Wesentlichen in Rechteckform angeordnete Ausnehmungen in dem Lagerbock bzw. der Montageplatte vor, wobei jeweils zwei Ausnehmungen hinsichtlich ihres verengten bzw. erweiterten Bereichs antiparallel ausgerichtet sind, so dass der vorbeschriebene Sicherungseffekt auch hier eintritt. Bei geringer Zahl von Ausnehmungen wird eine hohe Stabilität der Verbindung erreicht.

Erfindungsgemäß kann das eine oder die mehreren Befestigungsmittel relativ zu dem Lagerbock oder der Montageplatte als Sollbruchstelle gegen zu hohe Belastungen dimensioniert sein. Um bei gröberer Handhabung (etwa bei Gabelstaplerbedienung, unebener Rolloberfläche etc.) größere Schäden an der Rollenhalterung bzw. dem Behälter zu vermeiden, sollen die Befestigungsmittel so dimensioniert sein, dass sie einer zu großen Belastung der Rollenhalterung am ehesten nachgeben und beispielsweise abreißen oder abscheren. Die unverändert und unbeschädigt erhaltenen Komponenten (Montageplatte oder Lagerbock) können dann durch Ersatz der alten gegen neue Befestigungsmittel kostensparend wieder montiert werden.

Weitere vorteilhafte Ausführungsformen der Erfindung ergeben sich aus den Unteransprüchen.

Eine Ausführungsform der Erfindung wird nachstehend anhand eines Figurenbeispiels erläutert. Von den Figuren zeigt
- Fig. 1: eine vereinfachte perspektivische Ansicht einer Rollenhalterung, und
- Fig. 2: eine Seitenansicht der Rollenhalterung gemäß Fig. 1.

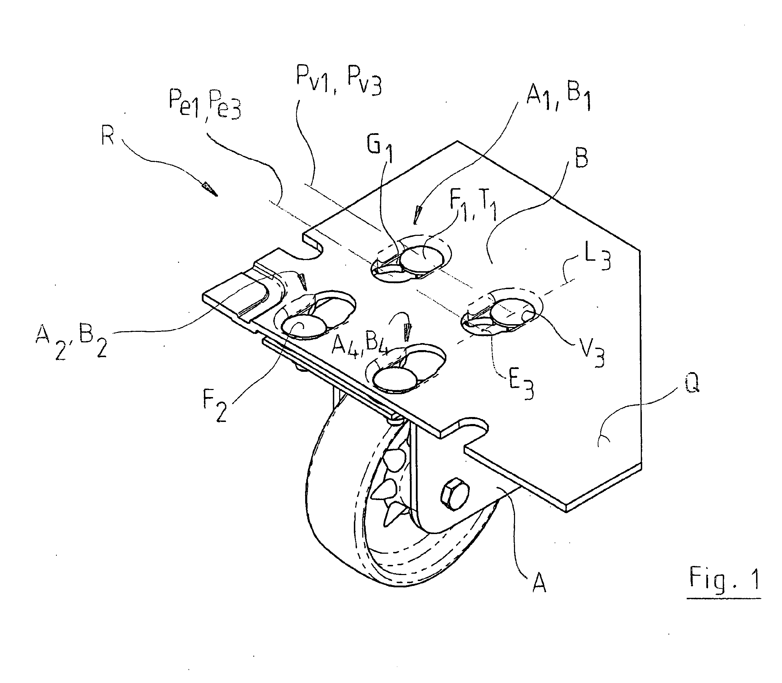

In Fig. 1 ist eine Rollenhalterung R in perspektivischer Ansicht gezeigt. Eine Montageplatte B ist als Teil eines Rahmens oder Unterbodens eines Behälters dargestellt und verläuft im Wesentlichen horizontal. Unterhalb der Montageplatte B ist ein Lagerbock A mit einer darin geführten Rolle angeordnet.

In die Montageplatte B sind in einer rechteckigen Anordnung vier Ausnehmungen B₁₋B₄ eingebracht, die jeweils die Form eines Langlochs mit einem erweiterten Bereich E₁₋E₄ und einem verengten Bereich V₁-V₄ haben (aus Gründen der Übersichtlichkeit sind nicht alle Ausnehmungen vollständig mit Bezugsziffern bezeichnet, jedoch gelten die Anmerkungen sinngemäß für alle vier Bereiche der Montageplatte B).

Der unterhalb der Montageplatte B angeordnete Lagerbock A weist ebenfalls vier Ausnehmungen A₁-A₄ auf, die in der dargestellten Anordnung jeweils unterhalb der verengten Bereiche V₁-V₄ der Langlöcher der Montageplatte B angeordnet und nicht unmittelbar zu erkennen sind.

Durch die Montageplatte B ragen von oben nach unten vier Befestigungselemente F₁₋F₄, die als Schlossschrauben ausgebildet sind und deren Schraubenkopf als Anschlagselement T₁-T₄ vorgesehen ist. Die Befestigungselemente F₁-F₄ sind (bei entferntem Lagerbock A) zwischen den verengten Bereichen V₁-V₄ und den erweiterten Bereichen E₁-E₄ verschieblich. Die Position in den jeweils verengten Bereichen sei mit Pᵥ₁-Pᵥ₄, die Position in den erweiterten Bereichen mit Pₑ₁-Pₑ₄ bezeichnet.

In den Positionen Pₑ₁-Pₑ₄ ist der erweiterte Bereich E₁-E₄ so dimensioniert, dass das Befestigungselement F₁-F₄ mit seinem Anschlagselement T₁-T₄ von unten durch die Ausnehmungen B₁- B₄ hindurchsteckbar ist. Dagegen bildet der verengte Bereich V₁-V₄ in den Positionen Pᵥ₁-Pᵥ₄ einen Anschlag G₁-G₄, der in vertikaler Richtung mit den Anschlagselementen T₁-T₄ der Befestigungselemente F₁-F₄ zusammenwirkt.

Die Ausnehmungen B₁ und B₂ sind hinsichtlich ihrer erweiterten bzw. verengten Bereiche antiparallel zueinander ausgerichtet, ebenso wie die Ausnehmungen B₃ und B₄. Die in dem Lagerbock A jeweils unterhalb der verengten Bereiche V₁-V₄ angeordneten Ausnehmungen A₁-A₄ bewirken somit eine Fixierung der Befestigungselemente F₁-F₄ gegen ein horizontales Verrutschen, sobald der Lagerbock A von unten auf die zuvor eingesetzten Befestigungselemente aufgesetzt wird.

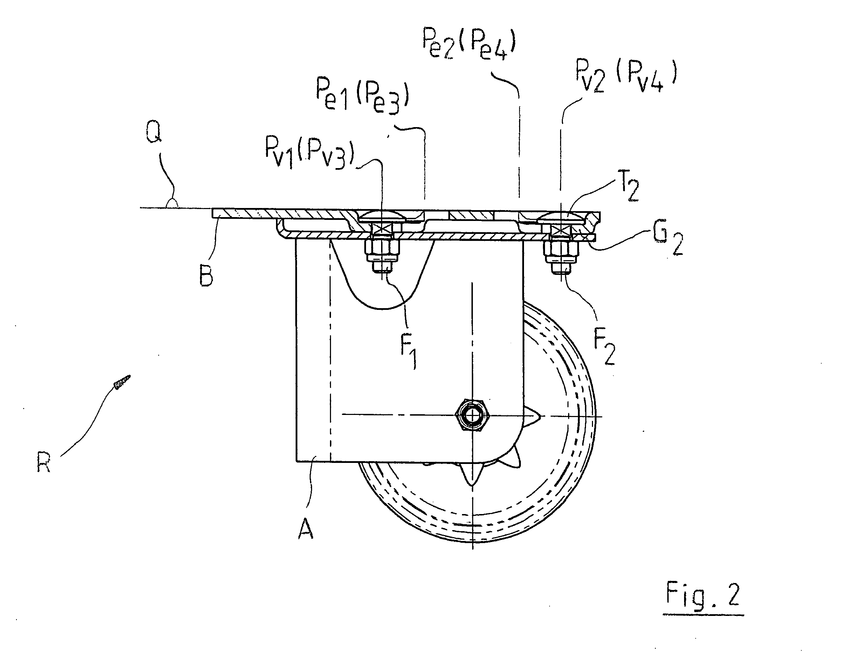

Die Ausnehmungen B₁-B₄ sind relativ zu einer gedachten Oberfläche Q der Montageplatte B um ein Maß vertikal nach unten versetzt ausgebildet. Wie in Fig. 2 zu sehen ist, dient dies der Aufnahme der Anschlagelemente T₁-T₄ unterhalb der gedachten Ebene Q, so dass die Befestigungselemente nicht oberhalb dieser Ebene weiteren Baukomponenten des Behälters entgegenstehen.

Die Seitenansicht gemäß Fig. 2 zeigt die Befestigungselemente F₁ und F₂ in ihrer Einbaulage. Es handelt sich dabei um Schlossschrauben mit einem vierkantförmigen Abschnitt unmittelbar unterhalb des den Schraubenkopf bildenden Anschlagelements T₁ und T₂. Die Breite des Langlochs in dem verengten Bereich sei dabei so gewählt, dass der Vierkantbereich der Schlossschrauben einer Verdrehung der Schraube um ihre Längsachse entgegenwirkt.

Zu erkennen sind auch die jeweiligen Positionen der verengten bzw. erweiterten Bereiche Pᵥ₁ und Pᵥ₂ sowie Pₑ₁ und Pₑ₂. Die perspektivisch dahinter liegenden Positionen für die Ausnehmungen B₃ und B₄ sind in Klammern dargestellt. Deutlich zu erkennen ist, dass der Lagerbock A die Ausnehmungen für die Schlossschrauben in dem Bereich hat, der den verengten Positionen der darüber liegenden Ausnehmungen der Montageplatte entspricht. Ohne den von unten auf die Befestigungselemente F₁ und F₂ aufgesetzten Lagerbock A wären die Befestigungselemente in den Langlöchern der Montageplatte verschieblich und könnten insbesondere in die jeweilige erweiterte Position Pₑ₁ und Pₑ₂ verschoben werden. Während in den jeweils verengten Positionen Pᵥ₁ und Pᵥ₂ die Montageplatte als Anschlag G₁ und G₂ einer vertikalen Bewegung der Befestigungselemente nach unten entgegensteht, so ist dies in den erweiterten Bereichen jeweils möglich. Die Schlossschrauben können daher in den erweiterten Bereichen von unten eingesetzt und dann seitlich in den verengten Bereich verschoben werden. In dieser Position lässt sich der Lagerbock mit seinen Ausnehmungen von unten auf die Schrauben aufsetzen und gegen die Montageplatte verschrauben.

## Patentansprüche

1. Rollenhalterung (R) zur Montage von Rollen oder Rädern an der Unterseite einer Montageplatte (B),
a) mit einem wenigstens eine Rolle aufnehmenden Lagerbock (A),
b) wobei der Lagerbock (A) und die Montageplatte (B) wenigstens je eine paarweise zusammenwirkende Ausnehmung (A₁, B₁,..) bzw. (A₂, B₂,..) aufweisen, und
c) wobei jedes Paar von Ausnehmungen (A₁/B₁, A₂/B₂...) zur Aufnahme eines beide Ausnehmungen durchragenden Befestigungselements (F₁, F₂...) ausgebildet ist, und
d) wobei das wenigstens eine Befestigungselement (F₁, F₂...) von der der Rolle zugewandten Seite der Montageplatte durch die Ausnehmung (B₁, B₂...) durchsteckbar ist,
**dadurch gekennzeichnet**,
e) dass die wenigstens eine Ausnehmung (B₁, B₂...) als Langloch entlang einer Lachlochachse (L₁, L₂...) mit einer Verengung (V₁, V₂) und einer Erweiterung (E₁, E₂) ausgebildet ist, so dass das die Ausnehmung (B₁, B₂...) durchragende Befestigungselement (F₁ F₂...) in der Montageplatte (B) aus einer erweiterten Position (Pₑ₁, Pₑ₂...) in eine verengte Position (Pᵥ₁, Pᵥ₂...) verschieblich ist, wobei die Verengung (V₁, V₂...) einen Anschlag (G₁, G₂...) für ein Anschlagselement (T₁, T₂...) des Befestigungselements (F₁, F₂...) bildet.

2. Rollenhalterung nach Anspruch 1, **dadurch gekennzeichnet, dass** die jeder Ausnehmung (B₁, B₂)... zugehörige Ausnehmung (A₁, A₂) im Lagerbock (A) so ausgebildet ist, dass das Befestigungselement (F₁, F₂...) die Ausnehmung (A₁, A₂...) nur in der Position (Pv) zu durchragen vermag.

3. Rollenhalterung nach Anspruch 1 oder 2, **dadurch gekennzeichnet, dass** das wenigstens eine Befestigungselement (F₁ F₂...) eine Schraube, insbesondere eine Schlossschraube ist, deren Kopf als Anschlagselement (T) gegen den Anschlag (G) wirkt.

4. Rollenhalterung nach Anspruch 2 oder 3, **dadurch gekennzeichnet, dass** die Verengung (V) als Verdrehsicherung mit einem flächigen Abschnitt des Befestigungselements (F₁, F₂...) zusammenwirkt.

5. Rollenhalterung nach Anspruch 4, **dadurch gekennzeichnet, dass** der flächige Abschnitt als Vierkant ausgebildet ist.

6. Rollenhalterung nach einem der vorigen Ansprüche, **dadurch gekennzeichnet, dass** die Montageplatte als Teil eines Rahmens ausgebildet ist.

7. Rollenhalterung nach einem Ansprüche 1 bis 5, **dadurch gekennzeichnet, dass** die Montageplatte als separat an einem Rahmen anzuordnendes Element ausgebildet ist.

8. Rollenhalterung nach einem der vorigen Ansprüche, **dadurch gekennzeichnet, dass** die Montageplatte im Bereich der Ausnehmung (B₁, B₂...) soweit gegenüber einer gedachten Ebene (Q) der Montageplatte vertieft ausgebildet ist, dass das Anschlagselement (T) zwischen Anschlag (G) und der Ebene (E) aufgenommen wird.

9. Rollenhalterung nach einem der vorigen Ansprüche, **dadurch gekennzeichnet, dass** wenigstens zwei Ausnehmungen (B₁, B₂) in Richtung ihrer Langlochlängsachsen oder parallel verschoben dazu so einander gegenüberliegen, dass ihre jeweiligen Positionen (Pₑ₁, Pₑ₂...) bzw. (Pᵥ₁, Pᵥ₂...) beide an den einander zugewandten oder abgewandten Enden der Langlöcher angeordnet sind.

10. Rollenhalterung nach Anspruch 9, **dadurch gekennzeichnet, dass** vier im Wesentlichen in Rechteckform angeordnete Ausnehmungen vorgesehen sind.

11. Rollenhalterung nach einem der vorigen Ansprüche **dadurch gekennzeichnet, dass** das wenigstens eine Befestigungsmittel gegenüber Lagerbock und Montageplatte als Sollbruchstelle gegen zu hohe Belastung dimensioniert ist.
